## Europäisches Patentamt
## European Patent Office
## Office européen des brevets

(11) Veröffentlichungsnummer: **0 092 504**
**A2**

(12) # EUROPÄISCHE PATENTANMELDUNG

(21) Anmeldenummer: 83710008.0

(51) Int. Cl.³: **G 01 B 11/00**, G 01 B 11/02

(22) Anmeldetag: 17.03.83

(30) Priorität: 24.03.82 SE 8201872

(43) Veröffentlichungstag der Anmeldung: 26.10.83
Patentblatt 83/43

(84) Benannte Vertragsstaaten: CH DE FR GB LI

(71) Anmelder: **ASEA AB, S-721 83 Västeras (SE)**

(72) Erfinder: **Adolfsson, Morgan, Dipl.-Ing., Sigfrid Edströms Gata 86, S-724 66 Västeras (SE)**
Erfinder: **Brogardh, Torgny, Platverksgatan 140, S-724 74 Västeras (SE)**
Erfinder: **Linge, Anders, Dipl.-Ing., Gryta As Hubbo, S-725 95 Västeras (SE)**

(74) Vertreter: **Boecker, Joachim, Dr.-Ing., Rathenauplatz 2-8, D-6000 Frankfurt a.M. 1 (DE)**

(54) Faseroptische Messanordnung mit einem Geber und einer Messelektronik zur Lagemessung.

(57) Faseroptische Messanordnung mit einem Geber (G) und einer Messelektronik (E) zur Lagemessung, beispielsweise der Entfernung und Winkellage eines Messobjekts (M) in bezug auf den Geber (G), wobei der Geber über mindestens einen Lichtleiter mit einer Messelektronik (E) verbunden ist, die mindestens eine Lichtquelle (1-4) zum Senden von Licht zum Geber (G) und mindestens einen Fotodetektor (14) zum Empfang von Licht vom Geber (G) enthält. Gemäss der Erfindung wird das Messobjekt (M) durch den Geber von dem Licht aus mindestens einer optischen Faser (20) beleuchtet, nachdem dieses Licht von der Endfläche der Faser (20) von einer oder mehreren optischen Linsen (23) zu einem zur Abbildung der genannten Endfläche konvergierenden Strahlenbündel umgeformt wurde. Der Geber kann dabei zusammen mit anderen Gebern gleicher Art an einer messenden und/oder handhabenden und/oder bearbeitenden Vorrichtung montiert sein, die mit einem elektronischen Steuersystem positionierbar ist. Die Messanordnung arbeitet mit einem oder mehreren Referenzabständen zwischen Geber und Messobjekt, deren Grösse von der Entfernung zwischen Messobjekt und Geber bestimmt wird, bei der die Endfläche der optischen Fasern auf dem Messobjekt abgebildet werden.

EP 0 092 504 A2

Ing. Dipl.-Ing. Joachim B o e c k e r

6 Frankfurt / Main 1 , 17.2.1983
Rathenauplatz 2 - 8
Telefon: (06 11) *28 23 55
Telex: 4 189 066 itax d

B/d 21 247 PE

0092504

<u>A S E A    Aktiebolag</u>

<u>Västeras/Schweden</u>

<u>Faseroptische Meßanordnung mit einem Geber und</u>

<u>einer Meßelektronik zur Lagemessung</u>

Die Erfindung betrifft eine faseroptische Meßanordnung mit einem Geber und einer Meßelektronik zur Lagemessung gemäß dem Oberbegriff des Anspruches 1.

Industrielle Werkstätten werden zunehmend automatisiert, um die Produktion zu steigern, die Qualität der Produkte zu verbessern, die Arbeitspersonen von gesundheitsschädlichen Arbeiten zu befreien und um den Energie- und Rohstoffbedarf zu vermindern. Wichtige Einrichtungen für diese Automation sind z.B. numerisch gesteuerte Bearbeitungsmaschinen, computergesteuerte Transport- und Handhabungseinrichtungen, computergesteuerte Montageautomaten, Industrieroboter und Prüfautomaten. In allen diesen Einrichtungen werden in immer größerem Maße Meßgeber zur Steuerung und Überprüfung eingesetzt, wodurch eine immer größer werdende Leistung beispielsweise bei der Bearbeitung oder Handhabung von mechanischen Werkstücken erreichbar ist. Ein wichtiger Entwicklungsschritt ist hierbei die Einführung adaptiver Steueranordnungen, welche in der Lage sind, Veränderungen im Umfeld der Einrichtung zu erkennen und sich ihnen anzupassen, beispielsweise Veränderungen der räumlichen Position oder der mechanischen Eigenschaften des Meßobjekts (z.B. eines Werkstücks).

In der industriellen Werkstattechnik besteht ein großer Bedarf an Manipulatoren und dergleichen, die mit Sensoren

/2

ausgerüstet sind. Aus der Literatur sind viele verschiedene Arten von Gebern (kapazitive, induktive, resistive, akustische und optische) bekannt. Keiner dieser Geber ist jedoch in der Lage, bei kleinen Geberabmessungen, die für die direkte Montage in Greiforganen, Werkzeugen oder dergleichen wichtig sind, große Meßabstände zu erfassen.

Die wichtigste Meßgröße in der industriellen Werkstatttechnik ist die Lage eines Werkstücks relativ zu einem Werkzeug, Greifklauen oder anderen bearbeitenden oder handhabenden Einrichtungen. Zur Bestimmung der Lage eines Werkstückes sind mehrere Größen erforderlich. Hierzu gehören - stets bezogen auf die bearbeitende oder handhabende Vorrichtung - die Lage eines bestimmten Punktes des Werkstückes, der Abstand zu einer bestimmten Fläche des Werkstückes, der Winkel einer Fläche des Werkstückes in bezug auf eine Achse der bearbeitenden oder handhabenden Vorrichtung, die Lage einer Kante des Werkstücks oder eines Loches im Werkstück usw.

Für solche Messungen sind billige Geber in Miniaturausführung ($< 2 \times 5$ mm) erwünscht, die einfach an verschiedenen Stellen der bearbeitenden oder handhabenden Vorrichtung oder an besonderen, wenig Platz erfordernden Meßvorrichtungen montiert werden können und die aus verhältnismäßig großer Entfernung ($> 10$ mm) den Abstand und die Winkellage einer Fläche relativ zu der Vorrichtung messen können. Mit den zur Zeit erhältlichen induktiven, kapazitiven und optischen Meßgebern ist dies nicht möglich, da für größere Meßabstände sehr raumaufwendige Geber notwendig sind, wenn die Genauigkeit erhalten bleiben soll.

Der vorliegenden Erfindung liegt die Aufgabe zugrunde, eine Meßanordnung der eingangs genannten Art zu entwickeln, die mit einem Geber auskommt, der kleine Abmessungen hat, aber über größere Abstände zu messen vermag.

- 3 -

Zur Lösung dieser Aufgabe wird eine Meßanordnung nach dem Oberbegriff des Anspruches 1 vorgeschlagen, die erfindungsgemäß die im kennzeichnenden Teil des Anspruches 1 genannten Merkmale hat.

Vorteilhafte Weiterbildungen der Erfindung sind in den Unteransprüchen genannt.

Der Geber für die Meßanordnung gemäß der Erfindung kann mit einer Größe von 1 x 3 mm in Abständen bis zu 100 mm mit einer Genauigkeit von 10 µm messen. Dabei kann gleichzeitig die Winkellage der Fläche des Werkstücks oder sonstigen Körpers, bis zu der der Abstand gemessen wird, in bezug auf eine Linie zwischen dem Geber und der Fläche mit einer höheren Genauigkeit als 1 Winkelgrad gemessen werden. Derselbe Geber kann außerdem zur Messung der Farbe, des Glanzes und der Bewegungsgeschwindigkeit einer Fläche verwendet werden. Zum Anschluß des Gebers an die Meßelektronik wird eine optische Faser verwendet, deren Durchmesser etwa 100 µm betragen kann, wodurch es zusammen mit den kleinen Abmessungen des Gebers möglich ist, beispielsweise in der Greifvorrichtung eines Roboters eine große Anzahl solcher Geber zu montieren, wodurch der "Roboterhand" ein berührungsfreies Erkennen von Abständen und Winkellagen in vielen verschiedenen Richtungen möglich ist.

Anhand der in den Figuren gezeigten Ausführungsbeispiele soll die Erfindung näher erläutert werden. Es zeigen:

Fig. 1    ein Ausführungsbeispiel einer Meßanordnung
          gemäß der Erfindung zur Messung des Abstandes
          zu einem Meßobjekt und der Winkellage des Meßobjektes in bezug auf die Mittelachse des Gebers,

Fig. 2    die für den Geber nach Fig. 1 wichtigen spektra-
          len Zusammenhänge,

/4

Fig. 3a einen Meßstab, in dem verschiedene Geber gemäß Fig. 1 montiert sind, längs eines Schnittes B-B in Fig. 3b,

Fig. 3b einen Schnitt durch den Geber längs der Linie A-A in Fig. 3a,

Fig. 4-10 verschiedene Ausführungsbeispiele von Gebern mit lichtleitenden Elementen, die Licht bis an verschiedene Stellen vor der Linse des Gebers leiten,

Fig. 11 einen Geber mit zwei Linsen zur Messung größerer Abstände,

Fig. 12 einen Geber, der sowohl in seiner Längsrichtung als auch senkrecht zur Längsrichtung zu messen vermag,

Fig. 13 und 14 Geber mit einer symmetrischen bzw. asymmetrischen dichroitischen Blende,

Fig. 15 einen Geber mit zwei Linsen, einer asymmetrischen dichroitischen Blende und einem dichroitischen Schirm an einem der Lichtleiter.

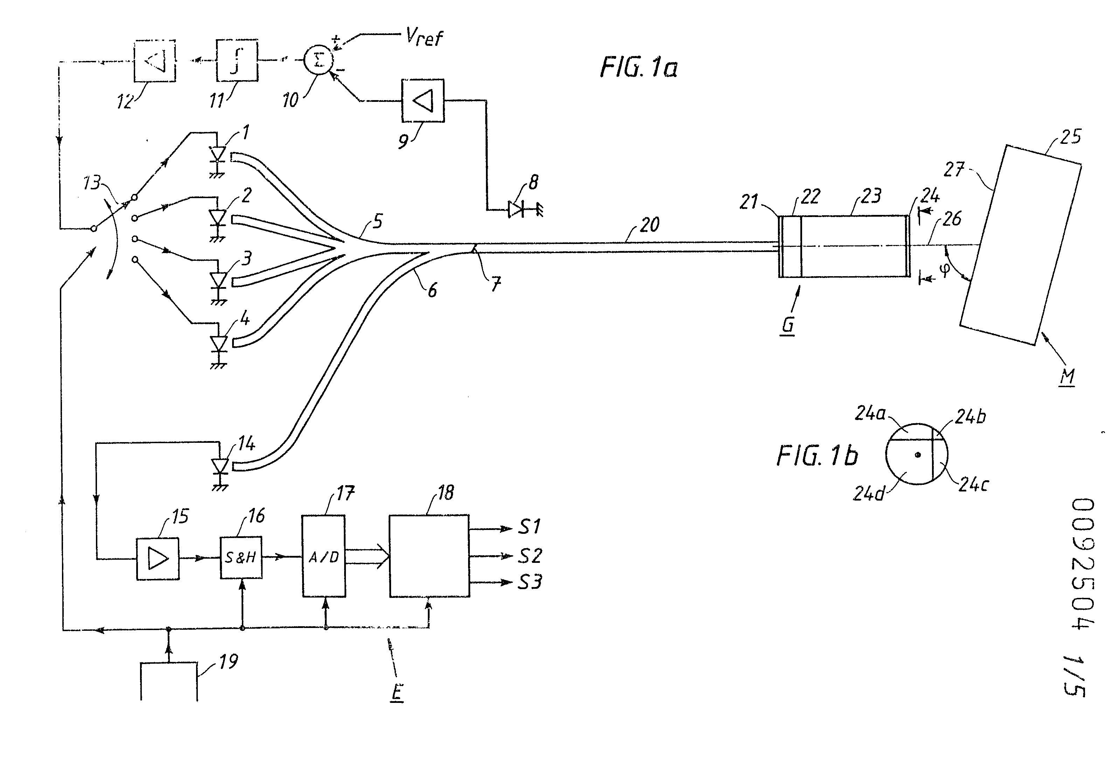

Figur 1 zeigt eine vollständige Meßanordnung mit Meßelektronik E, optischer Faser 20, Geber G und Meßobjekt M. Figur 1b zeigt den Geber G vom Meßobjekt M aus gesehen. Mit der gezeigten Meßanordnung können der Abstand zwischen G und M längs der Abtastlinie 26 und der Winkel $\mathcal{Y}$ zwischen der Fläche 27 des Meßobjektes und der Abtastlinie 26 sowohl in der Zeichenebene der Figur wie senkrecht dazu mit großer Genauigkeit gemessen werden.

Mit Hilfe des Umschalters 13 (Fig. 1) werden die Lichtquellen 1 bis 4, bei denen es sich um Leucht- oder Laserdioden handeln kann, einzeln an einen speisenden Verstärker 12 angeschlossen, der mit Hilfe des Reglers 11, des Differenzbilders 10, des Detektorverstärkers 9 und des Fotodetektors 8 dafür sorgt, daß die Lichtquellen proportional im Verhältnis zueinander stets dieselbe Lichtmenge in die optische Faser 20 über die Verzweigungen 5 und 6 einspeisen. Das Auskoppeln des den Detektor 8 beaufschlagenden Meßlichtes für diese Regelung geschieht mit Hilfe eines Strahlenteilers 7 in der optischen Faser 20. Ein
Teil des Lichtes, das in der Faser 20 vom Geber her zurückkommt, wird über die Verzweigung 6 zum Fotodetektor 14 geleitet, dessen Fotostrom vom Verstärker 15 verstärkt, von
einem S&H-Glied (sample- and hold-Glied) 16 abgetastet
und von einem Analog-Digitalwandler 17 in digitale Form umgewandelt wird. Das S&H-Glied speichert den auf seinen Eingang
gegebenen Wert für eine bestimmte Zeit. Die Weiterschaltung
des Umschalters 13, das Abtasten durch das S&H-Glied 16,
die Umwandlung im Analog-Digitalwandler 17 und die Meßwerteingabe in das Signalverarbeitungsglied 18 wird von einem
zentralen Steuerglied 19 gesteuert. Das Signalverarbeitungsglied 18 verarbeitet die Signale, die der Fotodetektor 14
bei Speisung des Gebers G mit dem Licht der Lichtquellen 1
bis 4 liefert, und bildet aus ihnen Meßsignale S1, S2 und
S3, wobei S1 den Abstand des Meßobjektes M vom Geber G angibt, während S2 und S3 die beiden Winkel angeben, welche
die Abtastlinie 26 in zwei senkrecht zueinanderstehenden
Richtungen mit der Fläche 27 bildet.

Der Geber G besteht aus einem Interferenzfilter 21, einem
optischen Abstandshalter 22, einer "graded index" Linse 23
(fokussierender Lichtleiter) und einem Interferenzfilter 24,
wobei alle diese Bausteine zu einem kompakten Zylinder zusammengefügt sind, dessen zum Meßobjekt M hin gerichtete
Endfläche in Figur 1b dargestellt ist. Diese Endfläche besteht aus vier Feldern 24a - d, von denen mindestens zwei
untereinander verschiedene Transmissionsspektren haben.

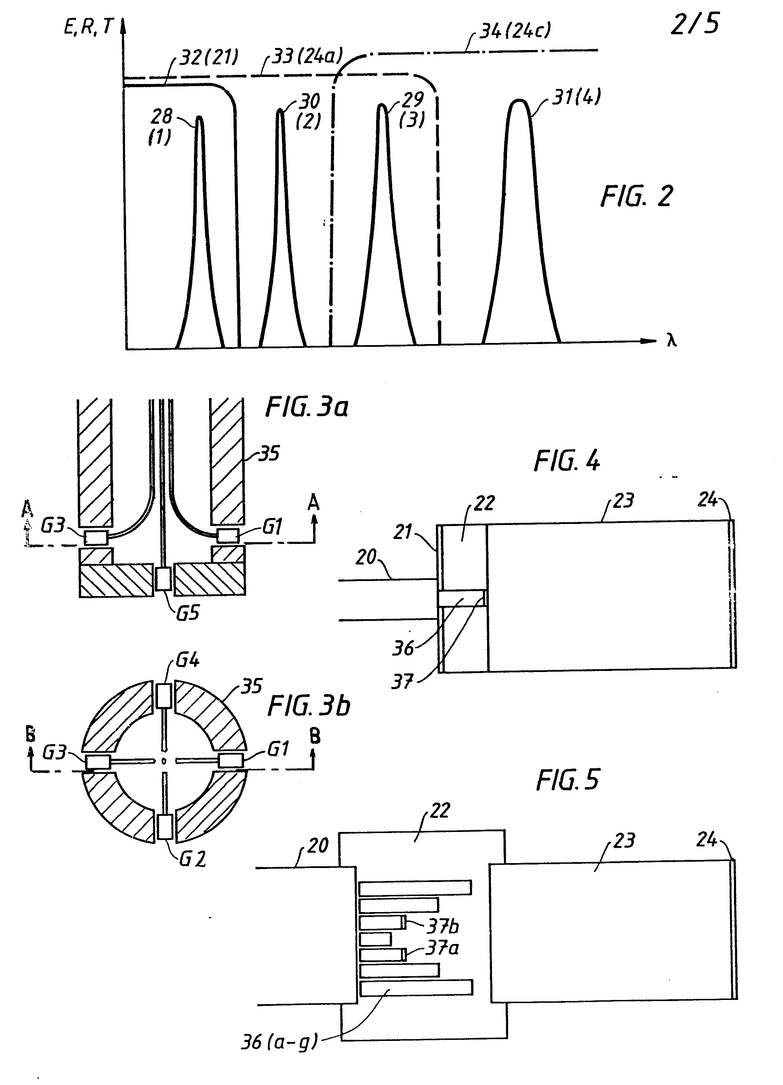

Um die Arbeitsweise der Meßanordnung verstehen zu können,
ist die Kenntnis der spektralen Zusammenhänge in der Meßanordnung erforderlich. Diese zeigt Figur 2, in der 28, 29,
30 und 31 die Emissionsspektren der Lichtquellen 1, 3, 2
bzw. 4 sind, während 32 das Reflexionsspektrum des Filters
21, 33 das Transmissionsspektrum des Filters 24a und 34 das Transmissionsspektrum des Filters 24c ist. Das Endflächenfeld 24b hat ein Transmissionsspektrum, dss sich durch Überlagerung der Transmissionsspektren 33 und 34 ergibt. Das Feld 24d hat kein Filter.

Es wird angenommen, daß fünf Geber G1 - G5 gemäß Figur 1 an einem Meßstab 35 gemäß Figur 3 montiert sind und daß der Meßstab beispielsweise von einem Roboterarm zuerst nach unten (auf das Meßobjekt zu) geführt werden soll, um mit Hilfe des Gebers G5 den Meßstab rechtwinklig auf eine bestimmte Fläche des Meßobjekts auszurichten, die der Fläche 27 in Figur 1 entspricht, und zwar in einem Abstand von 10 mm zwischen Geber und Meßobjekt. Wenn sich der Meßstab der Fläche nähert, wird von dieser eine schnell zunehmende erfaßbare Menge des Lichtes von der Lichtquelle 3 durch die Linse 23 in die Faser 20 reflektiert. Diese Bewegung wird so lange fortgesetzt, bis der Detektor 14 die größte Lichtintensität mißt. Wenn dies der Fall ist, so trifft die Abtastlinie 26 die Fläche 27 (Figur 1) in demjenigen Abstand, bei dem die Endfläche der Faser 20 (im Geber) auf der Fläche 27 abgebildet wird. Dieser Referenzabstand wird bestimmt von der axialen Brechungsindexvariation der Linse 23, der Länge der Linse 23, sowie der Dicke des Abstandsgliedes 22. Dieser Referenzabstand wird so gewählt, daß er möglichst nahe dem am häufigsten vorkommenden Meßabstand liegt, im angenommenen Beispielsfall 10 mm. Unter Aufrechterhaltung dieses Referenzabstandes zwischen Geber und Meßobjektfläche wird der Meßstab 35 dann zunächst in der xz-Ebene und dann in der yz-Ebene gedreht, wobei die Lichtquellen 4 und 3 bzw. 2 und 3 gleichzeitig abwechselnd den Geber speisen.

In Figur 1 ist angenommen, daß die z-Achse in Richtung der Abtastlinie 26 verläuft, die x-Achse in der Zeichenebene liegt und die y-Achse senkrecht zur Zeichenebene verläuft. Wenn die Lichtquelle 4 zur Aufrichtung (Senkrechtstellung) des Meßstabes in der xz-Ebene dient, so wird die Fläche 27 von den Feldern 24c und 24d beleuchtet, so daß das Detektorsignal bei einer Ausführung des Meßstabes mit den Filterfeldern nach Figur 1b bis zu einem bestimmten Grenzwert ansteigt, wenn der Winkel $\varphi$ größer wird, wobei dieser Grenzwert von der Apertur des Gebers bestimmt wird. Wenn die Lichtquelle 3 verwendet wird, werden sämtliche vier Filterfelder 24a - 24d Licht zu der Fläche 27 transmittieren und das Detektorsignal wird größer werden, wenn sich $\varphi$ 90° nähert. Somit erhält man bei einem rechten Winkel in der xz-Ebene ein maximales Detektorsignal bei der Verwendung der Lichtquelle 3, während das Detektorsignal bei Verwendung der Lichtquelle 4 gleichzeitig eine direkte Information darüber gibt, ob der Winkel $\varphi$ größer oder kleiner wird. Eine entsprechende Einstellung des Meßstabes wird dann in der yz-Ebene vorgenommen, wobei die Lichtquellen 2 und 3 verwendet werden.

Auf diese Weise kann der Geber G5 in Figur 3 dazu benutzt werden, den Meßstab 35 außerordentlich genau in einen Referenzabstand zu einer Fläche des Meßobjektes zu bringen und ihn senkrecht zu dieser Fläche auszurichten. Indem man dann bekannte Zusammenhänge zwischen Abweichungen vom Referenzabstand sowie Abweichungen von rechten Winkeln in der xz- und der yz-Ebene und die Detektorsignalverhältnisse S1, S2 und S3 verwendet, kann ein Manipulator in die gewünschte Position im Verhältnis zum Meßobjekt gefahren werden. Für diese analoge Messung wird auch ein Referenzlicht verwendet, das von der Lichtquelle 1 erzeugt wird. Dieses Licht wird vom Filter 21 reflektiert, und das entsprechende Detektorsignal ist ein Maß für die Dämpfung in der optischen Übertragung bis zum Geber und wird zur Kompensation von Veränderungen dieser Dämpfung benutzt. Wenn anstelle dieser Kompensation ein Signal erwünscht ist, das angibt, in welcher Richtung sich der Meßstab relativ zu dem Meßobjekt bewegt, und/oder ein größerer Meßbereich gewünscht wird, so kann das Filter 21 zusammen mit einem Filter 37 (Fig. 4) dazu benutzt werden, einen Referenzabstand gemäß Figur 4 zu wählen, wobei 32 in Figur 2 die Transmissionskurve für das Filter 37 ist. Mittels eines Lichtleiters 43 wird gemäß Figur 4 die Bildebene eines Teils der Endfläche der Faser 20 vorverschoben, wodurch man zwei Referenzabstände erhält. Dadurch, daß der lichtleitende Kanal 36 mit dem Filter 37 versehen ist, erhält man den größeren Referenzabstand nur dann, wenn Licht der Lichtquelle 1 gesendet wird, während man den kleineren Referenzabstand nur dann erhält, wenn Licht der Lichtquelle 3 gesendet wird. Zwischen den Referenzabständen bei Verwendung der Lichtquellen 1 und 3 werden die entsprechenden Detektorsignale kleiner oder größer, wenn sich der Meßstab dem Meßobjekt nähert bzw. größer oder kleiner, wenn sich der Meßstab vom Meßobjekt entfernt.

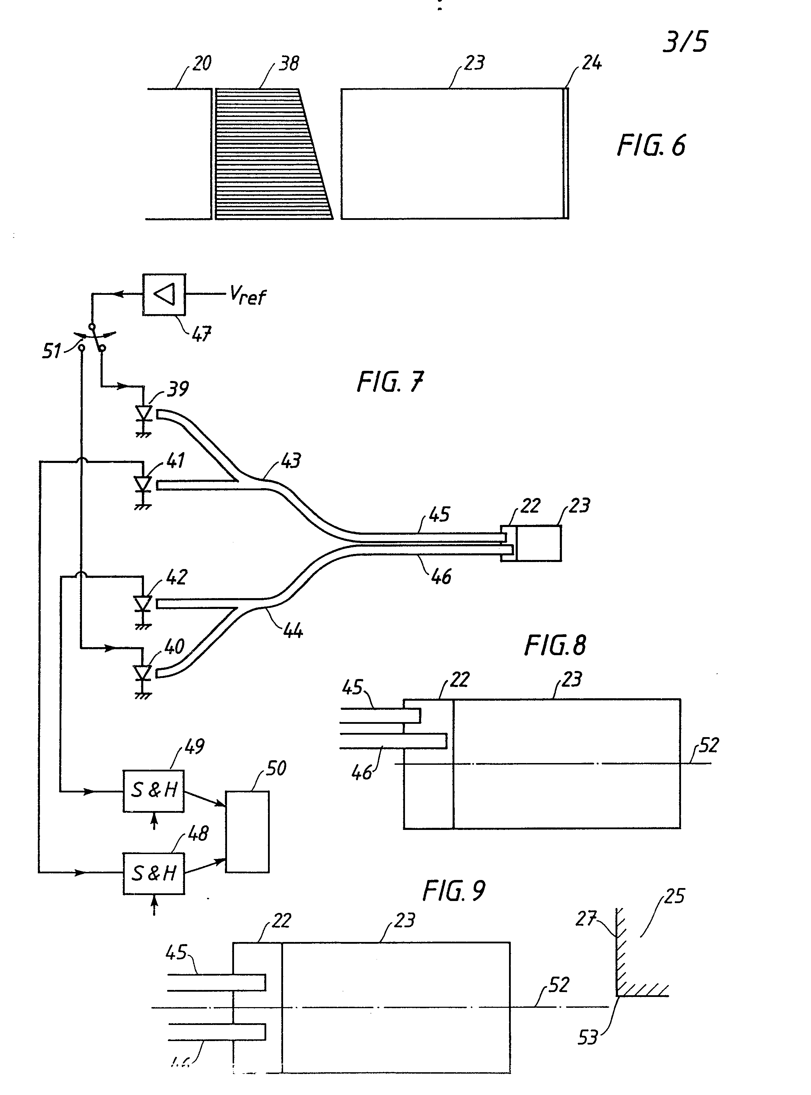

Diese Maßnahme, die optische Faser 20 in verschiedenen Abständen von der Linse 23 enden zu lassen, kann dazu benutzt werden, eine große Anzahl von Referenzabständen zu schaffen, wobei man ein sich zyklisch änderndes Detektorsignal erhält, wenn sich der Geber dem Meßobjekt nähert. Indem man die Anzahl der Zyklen des Detektorsignals mißt, können Lichtveränderungen gemessen werden, wodurch der Geber digitalen Charakter erhält. Figur 5 zeigt ein Beispiel für einen solchen digital arbeitenden Geber, bei dem die Faser 20 mit Hilfe von unterschiedlich langen Lichtleitern 36 optisch an die Linse 23 herangeführt ist. Für eine Lichtleiterlänge ist ein Filter 37 vorgesehen, wodurch man einen absoluten Referenzabstand erhält, von dem ausgehend die absolute Lage berechnet werden kann durch Zählung der Anzahl von Zyklen, welche das Detektorsignal durchläuft, gerechnet vom absoluten Referenzabstand aus. Je mehr Referenzabstände eingeführt werden, desto kleiner werden die zyklischen Veränderungen des Detektorsignals, und zum Schluß erhält man einen Geber mit einem kontinuierlich sich erstreckenden Meßbereich. Letzteres erhält man, wenn die optische Faser 20 schräggeschliffen ist, oder wenn, wie Figur 6 zeigt, ein schräggeschliffenes Faserbündel 38 zwischen der Faser 20 und der Linse 23 angeordnet wird. In Figur 6 hat das Faserbündel 38 eine ebene schräge Fläche. Durch Wahl verschiedener geometrischer Formen für die Faserbündelfläche kann man verschiedene Eichkurven für den Geber erreichen.

In den Figuren 4 bis 6 wird die optische Faser 20 mit Hilfe eines oder mehrerer lichtleitenden Bauteile zur Herstellung verschiedener Referenzabstände an die Linse 23 angeschlossen. Um die Referenzabstände selektieren zu können, werden die lichtleitenden Bauteile mit optischen Filtern versehen, deren Transmissionskurven den Emissionskurven der Lichtquellen in der Meßelektronik angepaßt sind, mit deren Hilfe die Referenzabstände selektiert werden. Eine andere Möglichkeit zur Selektierung der Referenzabstände zeigt Figur 7, wo man zwei Referenzabstände durch Verwendung von zwei optischen Fasern 45 und 46 zwischen Meßelektronik und Geber erhält, wobei sich die Endfläche der einen Faser 45 in größerem Abstand von der Linse 23 als die Endfläche der anderen Faser 46 befindet. Die Lichtquellen 39 und 40 werden vom Umschalter 51 abwechselnd an den speisenden Verstärker 47 angeschlossen, wodurch Licht abwechselnd über die Faserverzweigungen 43 bzw. 44 durch die Fasern 45 bzw. 46 zum Geber geleitet wird. Das in dem Geber reflektierte Licht wird zum Teil in die Fasern 45 und 46 zurückgeleitet und gelangt über die Faserverzweigungen 43 bzw. 44 zu den Fotodetektoren 41 bzw. 42. Die Signale der Fotodetektoren 41 und 42 werden S&H-Gliedern 48 und 49 zugeführt, die an ihren Ausgängen Meßsignale für das Signalverarbeitungsglied 50 liefern. Die Lichtquelle 39 ergibt mit der Geberkonstruktion nach Figur 7 einen kleineren Referenzabstand als die Lichtquelle 40, und die Detektorsignale der Fotodetektoren 41 bzw. 42 erreichen maximale Werte, wenn der betreffende Referenzabstand vorliegt. Wenn die Fasern 45 und 46 nebeneinander auf derselben Seite der Mittelachse 52 der Linse 23 liegen (Fig. 8), so kann bei einer Abweichung vom Referenzabstand Licht von der einen Faser in die andere geleitet werden. Wenn die Lichtquellen 39 bzw. 40 verwendet werden,

/10

2 247 PE

0092504

werden die Signale der Detektoren 42 bzw. 41 beim Vorliegen der Referenzabstände dabei Mindestwerte annehmen, was eine sicherere Erfassung der Referenzabstände ermöglicht, da die Messung der Extremwerte nicht durch Reflektionen im optischen System erschwert wird.

Wenn die Fasern 45 und 46 nebeneinander im gleichen Abstand von der Linse 23 angeordnet werden, kann gemäß Figur 9 die Lage einer Kante des Meßobjekts 25 gemessen und gleichzeitig angezeigt werden, daß die Fläche 27 des Meßobjektes 25 senkrecht zur optischen Achse 52 liegt. Wenn letzteres der Fall ist, erhält man nämlich in der Faser 45, wenn diese Licht von der Lichtquelle 39 überträgt, genau so viel Licht zurück wie in der Faser 46, wenn diese Licht von der Lichtquelle 40 überträgt. Durch Verwendung von drei Fasern mit separaten Lichtquellen kann also die Mittelachse 52 der Linse 23 senkrecht zur Fläche 27 ausgerichtet werden. Wenn eine Kante 53 vor den Geber nach Figur 9 kommt, so erfolgt eine abrupte Senkung der Größe des vom Detektor 42 kommenden Signals, welcher Detektor mit der Faser 46 verbunden ist. Dies bedeutet, daß die Lage der Kante 53 genau bestimmt werden kann. Es ist auch darauf hinzuweisen, daß das in die Faser 45 und 46 zurückkehrende reflektierte Licht von Variationen des Reflexionsvermögens der Fläche 27 moduliert wird, was direkt zur Messung der Geschwindigkeit der Fläche 27 benutzt werden kann, indem die Detektorsignale einem Korrelator zugeführt werden , der im Signalverarbeitungsglied 50 angeordnet sein kann.

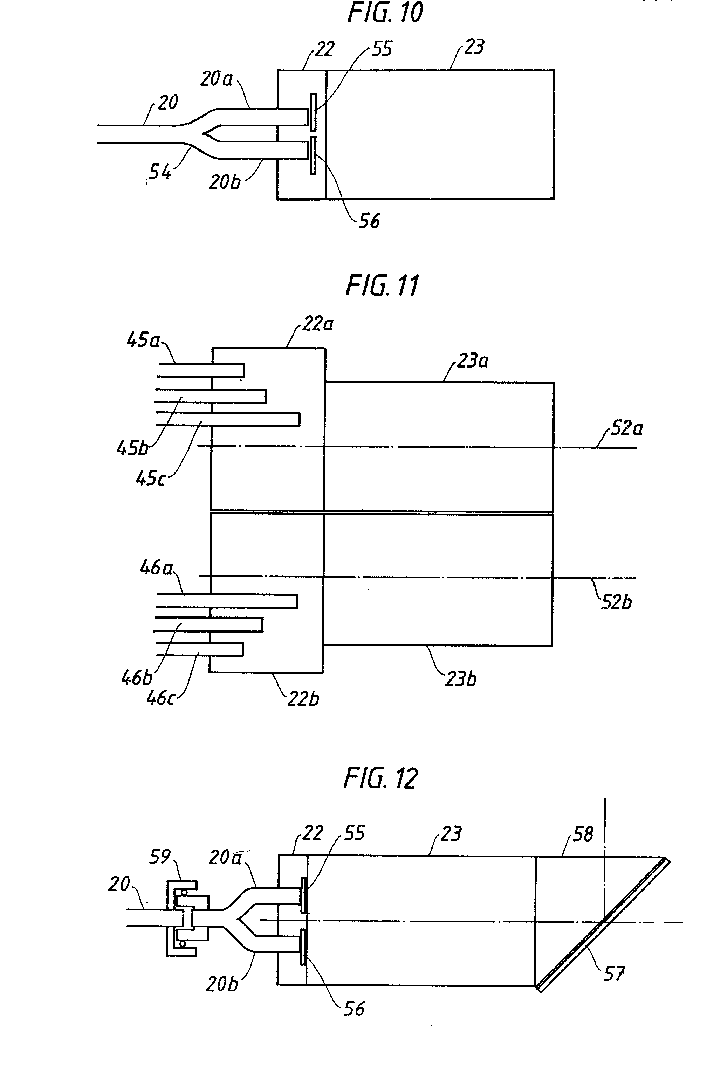

Statt zwei Fasern 45 und 46 zwischen Geber und Meßelektronik nach Fig. 7 bis 9 zu benutzen, kann die Wellenlängenselektierung der Faserendflächen auch gemäß Figur 10 erfolgen. Die Faser 20, die an die Meßelektronik gemäß Figur 1 angeschlossen ist, ist über eine Verzweigung 54 an die Fasern 20a und 20b angeschlossen. Die Endflächen dieser Fasern sind mit optischen Filtern 55 und 56 versehen, die selektiv Licht von der ihnen jeweils zugeordneten Lichtquelle in der Meßelektronik transmittieren.

Um bei der Formgebung des Gebers größere Gestaltungsfreiheit zu haben, insbesondere dann, wenn mehr Referenzabstände in größerem Abstand vom Geber gewünscht werden, kann
ein Doppellinsensystem (evtl. ein Trippellinsensystem) nach
Figur 11 verwendet werden. Licht von den Fasern 45a-45c kann
von einer Meßfläche vor dem Geber zu der Faser 45c - 45a und
umgekehrt geleitet werden. Mit diesem System mit drei Faserendflächen pro Linse kann man sechs Referenzabstände erhalten, was einer maximalen Lichtleitung zwischen den Fasern
a und c, a und b, b und b, a und a, b und a sowie c und  a
entspricht. Die Referenzabstände können einzeln gemessen
werden, wenn die Fasern 45a - 45c und 46a - 46c mit ihrer
betreffenden Lichtquelle und ihrem betreffenden Fotodetektor
verbunden sind, oder wenn die Fasern wellenlängenselektiert
werden, vgl. Figur 10. Wenn sämtliche Fasern 45a - 45c und
46a-46c direkt mit einer gemeinsamen Faser 20 verbunden werden, erhält man keinen absoluten Referenzabstand, jedoch
zyklische Detektorsignalvariationen, die beispielsweise zur
Bestimmung von Bewegungen des Meßstabes 35 in Figur 3 verwendet werden können. Bei großen Abständen zum Meßobjekt
erhält man dabei kein Detektorsignal, aber für Abstände
zwischen dem größten und dem kleinsten Referenzabstand erhält man ein zyklisch variierendes Detektorsignal.

Wenn die Fasern 45a - 45c durch eine einzige schräggeschliffene Faser ersetzt werden, verschwinden die genannten
zyklischen Detektorvariationen, und man erhält statt dessen
ein mit dem Meßwert analog variierendes Detektorsignal,
was bei Manipulatoren vorzuziehen ist, bei denen Regelsignale auch in großen Abständen von dem Referenzabstand erforderlich sind.

In Analogie zu den Figuren 9 und 10 können die Endflächen
der Fasern 45a - 45c und 46a - 46c in demselben Abstand von
den Linsen 23a bzw. 23b montiert werden, wodurch der Geber
gemäß Figur 11 die Lage einer Kante 53 genau erfassen kann,
vgl. Figur 9. Nachdem die Lage einer solchen Kante bestimmt
worden ist, möchte man den Meßstab nach Figur 3 oftmals
gern senken, um mit Hilfe der Geber G1- G4 die Fläche abzutasten, die zusammen mit der  zuvor erfaßten Fläche (27 in
Fig. 9) die Kante 53 bildet. Hierbei ist es wichtig, einen
möglichst schmalen Meßstab zu haben. Wie dies erreicht werden kann, zeigt Figur 12, in der der Geber nach Figur 10 durch ein schräggestelltes Interferenzfilter 57 ergänzt ist, das auf einem Prisma 58 befestigt ist. Hierdurch kann man mit Hilfe einer Wellenlängenselektierung die Meßrichtung wählen, und zwar entweder geradeaus oder zur Seite (nach rechts bzw. nach oben in Fig. 12). Wenn die Faser 20 mit einem drehbaren optischen Kontakt 59 versehen wird, kann der ganze Geber gedreht werden, wodurch man die Richtungen der Kanten abtasten und den Seitenflächen folgen kann.

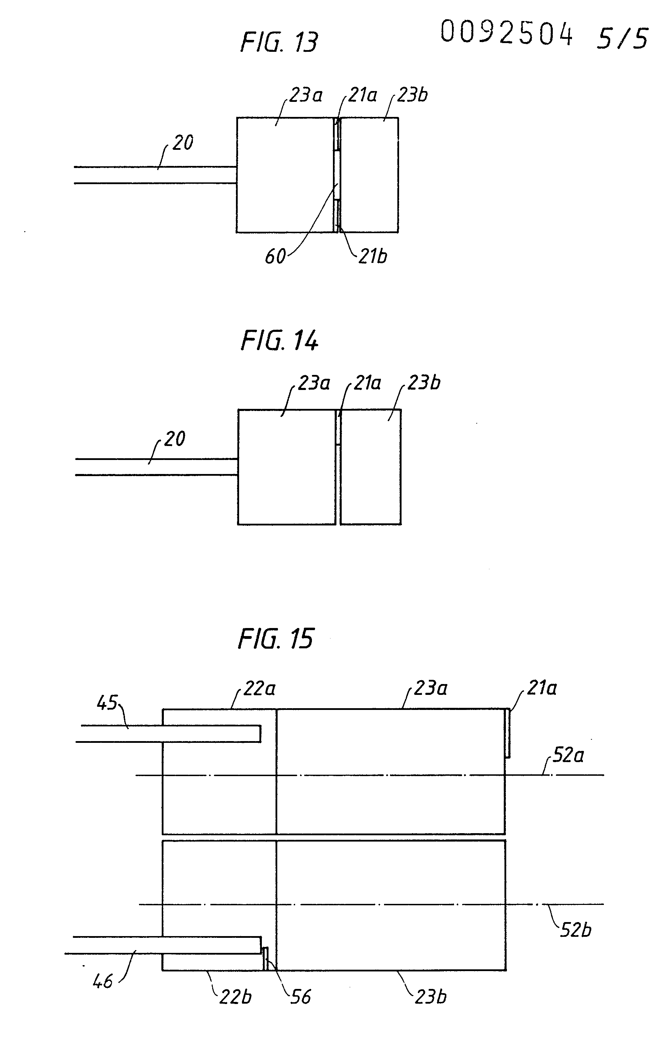

Wie anhand der Figuren 4, 5, 6 und 7 erläutert, kann man mehrere Referenzabstände (die als örtliche Extremwerte der Detektorsignale definiert sind, dadurch erhalten, daß Licht von den Filterendflächen in verschiedenen Abständen von der Linse zur Linse 23 geleitet wird. Eine andere Möglichkeit zur Gewinnung wohldefinierter Abstände, die auch Referenzabstände genannt werden können, besteht in der Verwendung dichroitischer Blenden entsprechend Figur 13. Wenn die Filter 21a und b das Reflexionsspektrum 32 gemäß Figur 2 haben, so wird Licht von der Lichtquelle 1 von den Filtern 21a und 21b blockiert, während Licht von der Lichtquelle 3 transmittiert wird. Dadurch trifft Licht von der Lichtquelle 1 auf eine geringere Apertur der Linse 23 als Licht von der Lichtquelle 3, für das eine vollständige Linsenapertur vorhanden ist. Man nennt nun das Detektorsignal bei Verwendung der Lichtquelle 1 $d_1$ und bei Verwendung der Lichtquelle 3 $d_3$ und bildet die Differenz $d_3 - d_1$. Bei großen und kleinen Meßabständen wird $d_3 - d_1 = 0$, und $d_3$ wird größer, wenn der Abstand kleiner bzw. größer wird. Wenn das reflektierte Licht, das in die Faser 20 zurückgelangt, die aus den Filtern 21a und 21 b gebildete Blende gerade ausfüllt, erhält man wohldefinierte Abstände, die dadurch zustandekommen, daß $d_3 - d_1$ schnell vom Wert Null ansteigt. Dies tritt sowohl auf der Geberseite wie auf der Meßobjektseite ein, wenn der Referenzabstand, der definiert wird, der Höchstwert von $d_3$ ist. Somit erhält man drei Referenzabstände, die zur Ausdehnung des Meßbereiches mit beibehaltener Meßgenauigkeit verwendet werden können.

Gemäß Figur 13 ist die dichroitische Blende in der "graded index"-Linse 23 angeordnet, die zu diesem Zweck in zwei Teile 23a und 23b geteilt ist. Die Teilung ist an der Stelle vorgenommen, daß das Licht von der Faser 20 dort, wo die Filter plaziert sind, parallel verläuft, was bei der Verwendung von Interferenzfiltern vorteilhaft ist. Dieselbe Filtermontage kann auch für den Geber in Figur 1 vorgenommen werden, wobei man einen Geberaufbau nach Figur 14 erhält. Die dichroitische Blende 21a liegt hier asymmetrisch im Strahlengang, wodurch es möglich wird, winkelabhängige Signale zu bekommen, wie dies oben anhand der Figuren 1 und 2 beschrieben wurde.

Dichroitische Blenden können auch in einem Zweilinsensystem nach Figur 15 angebracht werden, die mit Figur 11 zu vergleichen ist. Mit Hilfe des Filters 21a, das innerhalb der Linse 23a auf dieselbe Weise wie in Figur 13 plaziert werden kann, kann entsprechend der Beschreibung von Figur 1 die Winkelveränderung der Meßobjektflächen hinsichtlich ihrer Richtung bestimmt werden. Dies kann auch dann geschehen, wenn die Fasern 45 und 46 selektiv Licht zum Geber transmittieren und selektiv Licht vom Geber erfassen können. Licht von der Faser i, das von der Faser j erfaßt wird, nennt man $L_{ij}$. Dabei gilt folgendes, wenn die Meßobjektfläche relativ zu der Richtung der optischen Achsen 52a und b gedreht wird:

Wenn die Fläche senkrecht zur Achse 52 liegt, erhält man $L_{12} = L_{21} =$ den Höchstwert, während $L_{11}$ und $L_{22}$ niedrige Werte haben. Wenn die Fläche aus dieser Lage gegen den Uhrzeigersinn in Figur 15 gedreht wird, wird $L_{12}$ kleiner, während $L_{22}$ größer wird und einen Höchstwert bei einem Referenzwinkel erreicht, wonach $L_{22}$ kleiner wird. Wenn die Fläche in Figur 15 im Uhrzeigersinn aus der senkrechten

/14

Lage herausgedreht wird, so wird $L_{12}$ kleiner, während $L_{11}$ größer wird, bis ein Höchstwert bei einem Referenzwinkel erreicht worden ist, wonach $L_{11}$ wieder kleiner wird. Somit erhält man drei Referenzwinkel und die Möglichkeit, die Drehrichtung der Ebene zu bestimmen.

Um bei der Abstandsmessung beurteilen zu können, ob sich das Meßobjekt dem Geber nähert oder sich von diesem entfernt, ist in Figur 15 ein Filter 56 vorgesehen, das ungefähr zur Hälfte eine der Endflächen der Fasern bedeckt. Es wird nun angenommen, daß für die Geberausführung in Figur 15 $d_1$ das vom Detektor 42 gelieferte Signal ist, wenn über die Faser 45 Licht zum Geber geleitet wird, das eine Wellenlänge hat, die vom Filter 56 transmittiert wird, und daß $d_2$ das vom Detektor 42 gelieferte Signal ist, wenn über die Faser 45 Licht zum Geber geleitet wird, das eine Wellenlänge hat, die vom Filter 56 gesperrt wird. Bei großen Meßabständen wird dann $d_1 - d_2$ nahezu Null, was im Idealfall so lange gilt, bis der Referenzabstand erreicht worden ist, d.h. wenn $d_1$ seinen Höchstwert annimmt. Bei kleineren Abständen wird $d_1 - d_2 \approx d_1$ und damit wird $d_1 - d_2$ einen hohen Wert für Meßabstände haben, die kleiner als der Referenzabstand sind, und einen kleinen Wert für Meßabstände, die größer als der Referenzabstand sind, wodurch man eine eindeutige Information über den Meßabstand erhält.

Die vorstehend beschriebenen Geberausführungen können auf viele verschiedene Arten kombiniert werden, um optimale Meßanordnungen zu erhalten zur Messung des Abstandes von einer Fläche, der Neigung der Fläche zur Abtastrichtung, der Bewegungsgeschwindigkeit der Fläche (des Meßobjektes), der Flächenbegrenzungen, des Reflexionsvermögens der Fläche und der Farbe der Fläche. Die Geber sind insbesondere zur Messung bei der Steuerung von bearbeitenden und/oder hantierenden Vorrichtungen in beispielsweise Industrierobotern geeignet.

17.2.1983
21 247 PE
0092504

Die vorgenannten Ausführungsbeispiele können im Rahmen des allgemeinen offenbarten Erfindungsgedankens in vielfacher Weise variiert werden.

Auf Seite 13, Zeile 26 sollen die Indizes i und j das Zusammenwirken des Lichtes von zwei Fasern einer beliebig großen Zahl von Fasern kenntlich machen. Im letzten Absatz auf Seite 13 kann in Anlehnung an Figur 15 statt des Index 1 auch 45 und statt des Index 2 auch 46 gesetzt werden. Die Verwendung der Indizes 1 und 2 für die beiden Fasern 45 und 46 dient lediglich der vereinfachten Schreibweise.

Dr.-Ing. Dipl.-Ing. Joachim Boecker

- 16 -

6 Frankfurt/Main 1 , 17.2.1983
Rathenauplatz 2-8
Telefon: (0611) *28 23 55
Telex: 4 189 066 itax d

B/d 21 247 PE

0092504

<u>PATENTANSPRÜCHE:</u>

1. Faseroptische Meßanordnung mit einem Geber (G) und einer Meßelektronik (E) zur Lagemessung , beispielsweise zur Messung des Abstandes zwischen einem Geber (G) und einem Meßobjekt (M), des Winkels zwischen einer Fläche (27) des Meßobjektes (M) und einer Abtastlinie (26) zwischen dem Geber (G) und dem Meßobjekt, der Lage von Kanten und anderen topologischen Merkmalen des Meßobjektes, der räumlichen Anordnung von Variationen in der Farbe oder dem Glanz des Meßobjektes, der Bewegungsgeschwindigkeit des Meßobjektes relativ zum Geber und/oder anderer geometrischer Parameter optisch erfaßbarer Meßgrößen, wobei der Geber (G) durch mindestens einen Lichtleiter (20, 45, 46) mit der Meßelektronik (E) verbunden ist, die mindestens eine Lichtquelle (1-4) zum Senden von Licht zum Geber (G) und mindestens einen Fotodetektor (14) zum Empfang von Licht vom Geber (G) enthält, dadurch gekennzeichnet, daß das Meßobjekt (M) über den Geber (G) von dem Licht aus der mindestens einen optischen Faser (20, 45, 46) beleuchtet wird, nachdem dieses Licht von der Endfläche der Faser (20, 45, 46) und/oder von der Endfläche eines oder mehrerer lichtleitender Elemente (36, 38) von einer oder mehreren optischen Linsen (23) zu einem zur Abbildung der genannten Endfläche konvergierenden Strahlenbündel umgeformt wurde, daß Teile des vom Meßobjekt (M) reflektierten Lichtes von mindestens einer der optischen Linsen (23) gesammelt wird und als Lichtsignal vom Geber (G) in mindestens eine der optischen Fasern (20, 45, 46) gegeben wird, daß der Geber (G) eventuell zusammen mit weiteren Gebern gleicher Art an einer messenden und/oder hantierenden und/oder bearbeitenden Vorrichtung (35) montiert ist, die mit einem elektronischen Steuersystem positionierbar ist, daß die Meßsignale von der Meßelektronik (E) dem genannten Steuersystem zur Steuerung der Positionierung der Vorrichtung (35) relativ zum Meßobjekt (M) zugeführt werden, daß der Geber (G) bei dieser

/ 17

Positionierung in einem Zeitabschnitt auf das Meßobjekt (M) manipuliert wird, wobei mindestens ein Referenzabstand zwischen dem Geber (G) und dem Meßobjekt (M) als der Abstand bestimmt wird, bei welchem das von dem Meßobjekt (M) in mindestens eine der optischen Fasern (20, 45, 46) reflektierte Lichtsignal einen Extremwert annimmt, und zwar dann, wenn die Endfläche der optischen Faser (20, 45, 46) und/oder die Endfläche des lichtleitenden Elementes (36, 38) auf der Oberfläche des Meßobjektes (M) abgebildet wird/ werden.

2. Faseroptische Meßanordnung nach Anspruch 1, dadurch gekennzeichnet, daß eine oder mehrere der optischen Linsen (23) sogenannte "graded index"-Linsen (fokusierende Lichtleiter) sind.

3. Faseroptische Meßanordnung nach Anspruch 1 oder 2, dadurch gekennzeichnet, daß der Geber (G) bei der genannten Positionierung in einem Zeitabschnitt derart manipuliert wird, daß die optische Achse einer der optischen Linsen (23) einen gewünschten Winkel mit einer Fläche (27) des Meßobjektes (M) bildet, und daß der Geber (G) dabei im Verhältnis zu der genannten Fläche derart gedreht wird, daß man mindestens einen Referenzwinkel erhält, welcher dadurch definiert ist, daß bei ihm das vom Meßobjekt (M) in mindestens eine der optischen Fasern (20, 45, 46) reflektierte Lichtsignal einen Extremwert annimmt.

4. Faseroptische Meßanordnung nach einem der vorhergehenden Ansprüche, dadurch gekennzeichnet, daß die Anzahl der Endflächen der optischen Faser (45, 46) und/oder die Anzahl der Endflächen der lichtleitenden Elemente (20a, 20b) mindestens zwei beträgt und daß diese Endflächen derart nebeneinander angeordnet sind, daß eine oder mehrere der optischen Linsen (23) gleichzeitig die mindestens zwei Endflächen auf dem Meßobjekt abbilden kann/können, wodurch man mindestens drei Referenzwinkel (Referenzpositionen) am

17.2.1983
21 247 PE
0092504

Meßobjekt erhält, die verändert werden, wenn die betreffende der optischen Fasern (45, 46) und/oder das betreffende lichtleitende Element (20a, 20b) ein Maximum an vom Meßobjekt zurückreflektierter Lichtintensität erhält, und wenn die zurückreflektierten Lichtintensitäten für zwei oder drei der Fasern und/oder lichtleitenden Elemente gleichzeitig dieselben Werte haben.

5. Faseroptische Meßanordnung nach Anspruch 4, dadurch gekennzeichnet, daß das vom Meßobjekt in zwei oder drei der optischen Fasern (45, 46) und/oder lichtleitenden Elemente (20a, 20b) gleichzeitig zurückreflektierte Licht selektiv von einem oder mehreren Detektoren (14, 41, 42) in der Meßelektronik (E) erfaßt wird zur Steuerung der genannten Vorrichtung längs einer Fläche (27) des Meßobjektes (M), wobei Intensitätsvariationen des reflektierten Lichts zur Messung von Variationen in der Topografie und/oder dem Reflexionsvermögen der Fläche (27) und/oder der Bewegungsgeschwindigkeit des Meßobjektes relativ zu dem Geber entsprechend der Korrelationsmethode ausgewertet werden.

6. Faseroptische Meßanordnung nach einem der Ansprüche 1 bis 3, dadurch gekennzeichnet, daß die Anzahl der Endflächen der optischen Fasern (20, 45, 46) und/oder die Anzahl der Endflächen der lichtleitenden Elemente (36, 38) mindestens zwei beträgt und daß diese Endflächen derart nebeneinander sowie in verschiedenen Abständen in Richtung der optischen Achse von der Linse/den Linsen (23) angeordnet sind, daß die Abbildungen der einzelnen Endflächen auf dem Meßobjekt in unterschiedlichen Abständen des Gebers (G) vom Meßobjekt auftreten, und daß die unterschiedlichen Referenzabstände, von denen je einer pro Abbildung gewonnen wird, verwendet werden zur Ausdehnung des Meßbereichs und zur Bestimmung, ob sich das Meßobjekt dem Geber nähert oder sich von diesem entfernt.

7. Faseroptische Meßanordnung nach Anspruch 4 und/oder 6, dadurch gekennzeichnet, daß ein oder mehrere der optischen Fasern (20) und der lichtleitenden Elemente (36, 20a, 20b) mit optischen Filtern (21, 37, 55, 56) versehen sind, die an der Meßelektronik (E) befindliche Lichtquellen (1-4) derart angepaßt sind, daß Licht von mindestens einer dieser Lichtquellen (1) durch mindestens eine der Fasern/Elemente (20a) auf die Linse (23) transmittiert wird und Licht von mindestens einer anderen dieser Lichtquellen (2) von den Fasern/Elementen (20a) blockiert wird, wodurch man eine Wellenlängenselektierung der Endflächen der optischen Faser (20) und Endflächen des lichtleitenden Elementes (36, 20a, 20b) erhält.

8. Faseroptische Meßanordnung nach einem der Ansprüche 1 bis 3, dadurch gekennzeichnet, daß die Linse (23) mit einer dichroitischen Blende (24a, b, c) versehen ist, die beispielsweise aus einem oder mehreren Interferenzfiltern (24, 21) besteht, und daß die Transmissionsspektren (33, 34) der die Blende bildenden optischen Filter im Verhältnis zu den Emissionsspektren (2, 3, 4) der Lichtquellen in der Meßelektronik (E) so gewählt sind, daß die Wellenlängenselektierung durch die Blendenkonfiguration erfolgen kann.

9. Faseroptische Meßanordnung nach Anspruch 2 und 8, dadurch gekennzeichnet, daß die dichroitische Blende in einem durch einen Schnitt (zwischen 23a und b in Fig. 13 und 14) durch die Linse (23) gewonnenen Spalt angeordnet ist, wobei die Lage des Schnitts an einer solchen Stelle der axialen Achse der Linse (23) liegt, an der das Licht durch die Linse nahezu parallel verläuft.

10. Faseroptische Meßanordnung nach Anspruch 8 oder 9, dadurch gekennzeichnet, daß die zur Blende gehörenden optischen Filter in Form eines oder mehrerer Flächenfelder (24a, 24c) angeordnet sind, die derart um die optische Achse der Linse plaziert sind, daß beim Messen mit ver-

/ 20

schiedenen Lichtquellen (2, 3, 4) reflektierte Lichtsignale auftreten, welche Informationen über die Drehrichtung beim Drehen des Meßobjektes (M) enthalten.

11. Faseroptische Meßanordnung nach Anspruch 10, dadurch gekennzeichnet, daß bei der Messung mit verschiedenen Lichtquellen (2, 3, 4) bei definierten Abständen zwischen Geber und Meßobjekt eine schnelle Veränderung der Ableitung der Detektorsignale als Funktion des Meßabstandes auftritt.

12. Faseroptische Meßanordnung nach einem der Ansprüche 1-3 , dadurch gekennzeichnet, daß vor der Linse (23) ein schräggestellter dichroitischer Spiegel (57), der beipielsweise aus einem Interferenzfilter besteht, derart angeordnet ist, daß durch Verwendung verschiedener Lichtquellen mit unterschiedlichen Emissionsspektren die Meßrichtung wellenlängenselektiert werden kann.

13. Faseroptische Meßanordnung nach einem der Ansprüche 1 - 3, dadurch gekennzeichnet, daß vor der Linse (23) ein optisches Gitter derart angebracht ist, daß eine Wellenlängenselektierung der Meßrichtung durchgeführt werden kann.

14. Faseroptische Meßanordnung nach einem der Ansprüche 1 bis 3, dadurch gekennzeichnet, daß der Geber aus zwei nebeneinander montierten Linsen (23a, b in Fig. 15) besteht, daß mindestens zwei optische Fasern (45, 46) Licht in Richtung zu und in Richtung von den Linsen leiten, und daß die Fasern derart plaziert sind, daß Licht über die Linsen und das Meßobjekt von der einen Faser in eine andere Faser übertragbar ist, wobei die Endflächen der Fasern, zwischen welchen Licht übertragen wird, über beziehungsweise unter den optischen Achsen der beiden Linsen liegen (Fig. 11 und 15).

15. Faseroptische Meßanordnung nach Anspruch 14, dadurch gekennzeichnet, daß mindestens eine der Endflächen der optischen Fasern (46) zu einem Teil derart von einem optischen Filter (56) abgedeckt wird, daß durch Wellenlängenselektierung Informationen darüber erhaltbar sind, ob sich das Meßobjekt dem Geber nähert oder sich von diesem entfernt.

FIG. 1a

$V_{ref}$

FIG. 1b

24a  24b
24d  24c

G

M

S1
S2
S3

E

0092504  1/5

**FIG. 2**

E,R,T

32(21)  33(24a)  34(24c)

28 (1)  30 (2)  29 (3)  31(4)

λ

**FIG. 3a**

35

A   A
G3      G1

G5

**FIG. 4**

21  22  23  24

20

36

37

**FIG. 3b**

G4  35

B   B
G3      G1

G2

**FIG. 5**

22

20  23  24

37b
37a

36 (a-g)

0092504

3/5

FIG. 6

FIG. 7

FIG. 8

FIG. 9

## FIG. 10

## FIG. 11

## FIG. 12

FIG. 13

FIG. 14

FIG. 15